# EUROPEAN PATENT APPLICATION

(11) **EP 2 071 508 A1**
(43) Date of publication of application: **17.06.2009**
(21) Application number: 07743423.1
(22) Date of filing: 15.05.2007
(51) Int. Cl.: G06Q 50/00, B23P 21/00, B65G 61/00, G05B 19/418, G06Q 10/00

(54) **PARTS MANAGEMENT PROGRAM, PART MANAGEMENT METHOD, AND PARTS MANAGEMENT DEVICE**

(30) Priority: 28.09.2006 JP 2006265888
(71) Applicant: Fujitsu Limited, Kawasaki-shi, Kanagawa 211-8588 (JP)
(72) Inventor: ISHIZUKA, Masaaki, Kawasaki-shi, Kanagawa 211-8588 (JP)
(74) Representative: Ward, James Norman
(86) International application number: PCT/JP2007/059988
(87) International publication number: WO 2008/038434

(57) **Abstract**

To manage parts in a production line, a subtracting unit of a parts management system specifies parts used for an assembly product of which production is started, the number of using the parts, and a supply box, based on parts configuration information of a parts-configuration-information storage unit and a production order of a production order DB. The subtracting unit subtracts the number of used parts from the number of parts in supply box data corresponding to a specified supply box, thereby updating a supply box DB. A tracking unit detects entering and exiting of a supply box to or from a line based on information of a UHF-band RFID tag. A state reflecting unit reflects a movement of the supply box, to the supply box DB. An extracting unit writes an update log of the supply box DB into a supply-box-log storage unit. An operation monitoring unit monitors excessiveness and shortage of a parts supply pace, a stagnation of the supply box in a line, and the number of parts, based on an update log of a supply-box-log storage unit. An editing unit notifies information to a warehouse management system based on an update log of the supply-box-log storage unit.

## Description

### TECHNICAL FIELD

The present invention relates to a parts management program, a parts management method, and a parts management device for managing parts used to produce an assembly product, and, more particularly to a parts management program, a parts management method, and a parts management device capable of accurately managing a parts inventory in a production line.

### BACKGROUND ART

In the distribution industry or the like, systems using an RFID tag have been developed recently. For example, Patent Document 1 discloses a developed system that performs an inventory management at a warehouse by attaching an RFID tag to a management box accommodating managed products such as commercial products.

Patent Document 1: Japanese Laid-open Patent Publication No. 2005-231882

### DISCLOSURE OF INVENTION

### PROBLEM TO BE SOLVED BY THE INVENTION

In managing a parts inventory, development of an inventory management system using an RFID tag at a parts warehouse has been underway. However, to accurately manage a parts inventory, it is necessary to manage a parts inventory in a production line as well as at a warehouse. However, in a production line and the like of an information processing device, it is not possible to manage a parts inventory by attaching an RFID tag to each part, from the viewpoint of cost of RFID tags and cost of attaching these tags to parts.

As a result, it is difficult to identify a parts inventory in each production line or at each process of each production line. Consequently, a large amount of time is necessary to check a parts inventory at a time of inventory taking.

The present invention has been achieved to solve the above problems of the conventional technique, and an object of the invention is to provide a parts management program, a parts management method, and a parts management device capable of accurately managing a parts inventory in a production line.

### MEANS FOR SOLVING PROBLEM

To solve the problems as described above and to achieve an object, the invention according to claim 1 is a parts management program for managing parts used to produce an assembly product, and the parts management program causes a computer to execute a used-parts-information reading step of reading parts identification information and number of parts corresponding to an assembly product of which production is started as used-parts identification information and a used number from a storage device that stores parts constitution information that includes assembly-product identification information identifying an assembly product, parts identification information identifying parts used to produce the assembly product, and number of the parts, by relating these pieces of information to each other, and a number-of-parts updating step of reading parts container information of a parts container that accommodates parts used for an assembly product of which production is started from a storage device that stores parts container information, for each parts container, including parts identification information of parts accommodated in each parts container and number of the parts by relating these pieces of information to parts-container identification information identifying a parts container, and writing into a storage device, parts container information that includes an updated number of parts obtained by subtracting the number of used parts from number of parts identified by the used-parts identification information read by the used-parts-information reading step.

According to the invention of claim 1, parts identification information and the number of parts corresponding to an assembly product of which production is started are read as used-parts identification information and a used number from a storage device that stores parts constitution information that includes assembly-product identification information identifying an assembly product, parts identification information identifying parts used to produce the assembly product, and the number of the parts, by relating these pieces of information to each other. Parts container information of a parts container that accommodates parts used for an assembly product of which production is started is read from a storage device that stores parts container information, for each parts container, including parts identification information of parts accommodated in each parts container and the number of the parts by relating these pieces of information to parts-container identification information identifying a parts container. The parts container information that includes an updated number of parts obtained by subtracting the number of used parts from the number of parts identified by the used-parts identification information is written into the storage device. Therefore, a state of using parts in each parts container can be managed.

Further, the invention according to claim 2 in an aspect of the invention as described above, further causes a computer to execute an exit-side-parts-container-identification-information reading step of reading parts-container identification information from an RFID tag attached to the parts container when the parts container is collected from a production line, a remaining-number-of-parts determining step of determining whether number of parts is zero in the parts container information identified by parts-container identification information read by the exit-side-parts-container-identification-information reading step, and a box-collection-time-alarm output step of outputting an alarm when it is determined by the remaining-number-of-parts determining step that number of parts is not zero.

According to the invention of claim 2, when a parts container is collected from a production line, parts-container identification information is read from an RFID tag attached to a parts container. It is determined whether the number of parts is zero in the parts container information identified by the read parts-container identification information. When it is determined that the number of parts is not zero, an alarm is output. Therefore, a manager of the production line can check whether parts are properly used.

Further, in the invention according to claim 3 in an aspect of the invention as described above, the parts container information includes a last subtraction time indicating a time when the used number is subtracted last, and the number-of-parts updating step writes into a storage device, parts container information updated by using a value obtained by subtracting the used number as a new number of parts and using a current time as a new last subtraction time, and the invention further causes a computer to execute an exiting-time-container-stagnation-alarm output step of comparing the current time with a stagnation limit time that is obtained by adding a predetermined stagnation limit time to a last subtraction time of parts container information identified by parts-container identification information read by the exit-side-parts-container-identification-information reading step, and outputting an alarm when the current time has passed the stagnation limit time.

According to the invention of claim 3, the number of parts after subtracting a used number of parts is set as a new number of parts, and updated parts container information using the current time as a new last subtraction time is written into a storage device. The current time is compared with a stagnation limit time which is obtained by adding a predetermined stagnation limit time to a last subtraction time of the parts container information identified by parts-container identification information read from an RFID tag. When the current time is equal to or larger the stagnation limit time, an alarm is output. Therefore, a manager of a production line can recognize a stagnation state of an empty box.

Further, the invention according to claim 4 in an aspect of the invention as described above, further causes a computer to execute a stagnation-time-measurement starting step of determining whether number of parts updated by the number-of-parts updating step is zero, and starting a time measurement when the number of pars is zero, and an in-site-container-stagnation-alarm output step of determining whether a time of which measurement is started by the stagnation-time-measurement starting step has passed a predetermined time, and outputting an alarm when the started measurement time has passed the predetermined time.

According to the invention of claim 4, it is determined whether an updated number of parts is zero. When the number of parts is zero, a time measurement is started, and it is determined whether the started measurement time has passed a predetermined time. When the started measurement time has passed the predetermined time, an alarm is output. Therefore, a manager of a production line can recognize a stagnation time of an empty box.

Further, the invention according to claim 5 in an aspect of the invention as described above, further causes a computer to execute an entering-side-parts-container-identification-information reading step of reading parts-container identification information from an RFID tag attached to the parts container when the parts container is taken to a production line by accommodating parts into the parts container by number of a dispatch instruction, a total-number-subtraction-interval measuring step of measuring as a total-number subtraction interval, a time interval from when parts-container identification information is read by the entering-side-parts-container-identification-information reading step until when number of parts updated by the number-of-parts updating step becomes zero, a parts-supply-interval measuring step of measuring as a parts-supply time interval, a time interval of parts-container identification information read by the exit-side-parts-container-identification-information reading step for a same type of parts container, a parts-supply-interval-properness determining step of determining whether a parts supply interval is appropriate based on a total-number subtraction interval measured by the total-number-subtraction-interval measuring step and a parts-supply time interval measured by the parts-supply-interval measuring step, and a parts-supply-interval-alarm output step of outputting an alarm when a parts supply interval is determined as not appropriate by the parts-supply-interval-properness determining step.

According to the invention of claim 5, when a parts container is taken to a production line by accommodating parts into the parts container by the number of dispatch instruction, parts-container identification information is read from an RFID tag attached to the parts container. A time interval from when the parts-container identification information is read until when the number of parts in the parts container information identified by the parts-container identification information becomes zero is measured as a total-number subtraction interval. A time interval of reading parts-container identification information from the RFID tag at an exit time of the container of the same type of parts is measured as a parts-supply time interval. Whether a parts supply interval is appropriate is determined based on the measured total-number subtraction interval and the parts-supply time interval. When it is determined that the parts-supply time interval is not appropriate, an alarm is output. Therefore, a manager of a production line can recognize whether a parts supply pace is appropriate.

Further, the invention according to claim 6 in an aspect of the invention as described above, further causes a computer to execute a line-inventory-information output step of outputting parts inventory information in a production line based on parts container information of which number of parts is updated by the number-of-parts updating step.

According to the invention of claim 6, parts inventory information in a production line is output based on parts container information of which number of parts is updated. Therefore, a parts inventory in the production line can be easily recognized.

Further, the invention according to claim 7 in an aspect of the invention as described above further causes a computer to execute a dispatch-parts-information notifying step of notifying parts identification information and number of parts accommodated in a parts container from which parts-container identification information is read by the entering-side-parts-container-identification-information reading step, as dispatch information, to a warehouse management system that manages information of a warehouse that stores parts.

According to the invention of claim 7, parts identification information and the number of parts accommodated in a parts container from which parts-container identification information is read at the time of taking the parts container to a production line are notified as dispatch information to a warehouse management system that manages information of a warehouse that stores the parts. Therefore, the warehouse management system can recognize a movement of parts from the warehouse to the production line.

Further, the invention according to claim 8 in an aspect of the invention as described above further causes a computer to execute a product-in-process-information notifying step of notifying number of parts updated by the number-of-parts updating step and parts identification information, as product-in-process information, to a warehouse management system that manages information of a warehouse that stores the parts.

According to the invention of claim 8, an updated number of parts and parts identification information are notified as product-in-process information to a warehouse management system that manages information of a warehouse that stores the parts. Therefore, the warehouse management system can recognize a state that parts have changed to a product in process.

Further, in the invention according to claim 9 in an aspect of the invention as described above, the parts container is a parts supply box.

According to the invention of claim 9, a parts container is configured as a supply box. Therefore, a state of using parts in each supply box can be managed.

Further, the invention according to claim 10 is a parts management method performed by a parts management device for managing parts used to produce an assembly product, the method includes a used-parts-information reading step of reading parts identification information and number of parts corresponding to an assembly product of which production is started as used-parts identification information and a used number from a storage device that stores parts constitution information that includes assembly-product identification information identifying an assembly product, parts identification information identifying parts used to produce the assembly product, and number of the parts, by relating these pieces of information to each other, and a number-of-parts updating step of reading parts container information of a parts container that accommodates parts used for an assembly product of which production is started from a storage device that stores parts container information, for each parts container, including parts identification information of parts accommodated in each parts container and number of the parts by relating these pieces of information to parts-container identification information identifying a parts container, and writing into a storage device, parts container information that includes an updated number of parts obtained by subtracting the number of used parts from number of parts identified by the used-parts identification information read by the used-parts-information reading step.

According to the invention of claim 10, parts identification information and the number of parts corresponding to an assembly product of which production is started are read as used-parts identification information and a used number from a storage device that stores parts constitution information that includes assembly-product identification information identifying an assembly product, parts identification information identifying parts used to produce the assembly product, and the number of the parts, by relating these pieces of information to each other. Parts container information of a parts container that accommodates parts used for an assembly product of which production is started is read from a storage device that stores parts container information, for each parts container, including parts identification information of parts accommodated in each parts container and the number of the parts by relating these pieces of information to parts-container identification information identifying a parts container. The parts container information that includes an updated number of parts obtained by subtracting the number of used parts from the number of parts identified by the used-parts identification information is written into the storage device. Therefore, a state of using parts in each parts container can be managed.

Further, the invention according to claim 11 is a parts management device that manages parts used to produce an assembly product, and the device includes a parts-configuration-information storage unit that stores assembly-product identification information identifying an assembly product, parts identification information identifying parts used to produce the assembly product, and number of the parts, by relating these pieces of information to each other, as parts constitution information, a parts-container-information storage unit that stores parts identification information of parts accommodated in a parts container and number of the parts, by relating these pieces information to parts-container identification information identifying a parts container, as parts container information, for each parts container, a used-parts-information reading unit that reads parts identification information and number of parts corresponding to an assembly product of which production is started, as used-parts identification information and a used number, from the parts-configuration-information storage unit, and a number-of-parts updating unit that reads parts container information of a parts container accommodating parts used for an assembly product of which production is started, from the parts-container-information storage unit, and writes into the parts-container-information storage unit, parts container information updated by using a new number of parts obtained by subtracting the number of used parts from number of parts identified by used-parts identification information read by the used-parts-information reading unit.

According to the invention of claim 11, assembly-product identification information identifying an assembly product, parts identification information identifying parts used to produce the assembly product, and the number of the parts are stored, by relating these pieces of information as parts constitution information. Parts identification information of parts accommodated in a parts container and the number of the parts are related to parts-container identification information identifying a parts container, and are stored as parts container information, for each parts container. Parts identification information and the number of parts corresponding to an assembly product of which production is started are read as used-parts identification information and a used number. Parts container information of a parts container that accommodates parts used for an assembly product of which production is started is read. The parts container information is updated by a new number of parts obtained by subtracting the number of used parts from the number of parts identified by the used-parts identification information. Therefore, a state of using parts in each parts container can be managed.

### EFFECT OF THE INVENTION

According to the present invention, because a state of using parts in each parts container is managed, a parts inventory in a production line can be accurately managed.

According to the present invention, because a manager of a production line can check whether parts are being appropriately used, illegitimate use of parts can be prevented.

According to the present invention, because a manager of a production line can recognize a stagnation state of an empty box, the production line can be improved.

According to the present invention, because a manager of a production line can recognize whether a parts supply pace is appropriate, the production line can be improved.

According to the present invention, because a parts inventory in a production line can be easily recognized, checking of a parts inventory at a time of inventory taking can be performed in a short time.

According to the present invention, because a warehouse management system can recognize a movement of parts from a warehouse to a production line, an inventory at a parts warehouse can be accurately managed.

Further, according to the present invention, because the warehouse management system can recognize a state that parts are changed to a product in process, a parts inventory can be accurately managed.

### BRIEF DESCRIPTION OF DRAWINGS

[FIG. 1] FIG. 1 is an explanatory diagram of an outline of a parts management system according to an embodiment of the present invention.
[FIG. 2] FIG. 2 is a functional block diagram of a system configuration of the parts management system according to the embodiment.
[FIG. 3] FIG. 3 is one example of a record configuration of a BOM stored in a production-BOM master DB.
[FIG. 4] FIG. 4 is an example of attaching an RFID tag to a supply box.
[FIG. 5] FIG. 5 is one example of a record configuration of a supply-box master information stored in a supply-box master DB.
[FIG. 6] FIG. 6 is one example of a record configuration of supply box data stored in the supply box DB.
[FIG. 7] FIG. 7 is one example of a record configuration of a tracking log.
[FIG. 8] FIG. 8 is one example of a record configuration of production order information stored in a production order DB.
[FIG. 9] FIG. 9 is an explanatory diagram of a subtraction process performed by a subtracting unit.
[FIG. 10] FIG. 10 is one example of parts configuration information stored in a parts-configuration-information storage unit.
[FIG. 11-1] FIG. 11-1 is an explanatory diagram of a parts-supply-pace excessiveness/shortage alarm output by an operation monitoring unit.
[FIG. 11-2] FIG. 11-2 is an explanatory diagram of an empty-box collection/stagnation/contradiction alarm output by the operation monitoring unit.
[FIG. 12] FIG. 12 is one example of a record configuration of shelf stock information stored in a shelf stock DB.
[FIG. 13] FIG. 13 is an explanatory diagram of monitoring of a parts inventory for each line, each process, and each supply box performed by the operation monitoring unit.
[FIG. 14] FIG. 14 depicts a relationship of data between systems according to the present embodiment.
[FIG. 15] FIG. 15 is a flowchart of a process procedure performed by the parts management system according to the present embodiment.
[FIG. 16] FIG. 16 is a flowchart of a process procedure of a subtraction process depicted in FIG. 15.
[FIG. 17] FIG. 17 is a functional block diagram of a configuration of a computer that executes a parts management program according to the present embodiment.
[FIG. 18] FIG. 18 is one example of a tag case.
[FIG. 19-1] FIG. 19-1 depicts a parts conveyance mode using a box-type parts container.
[FIG. 19-2] FIG. 19-2 depicts a packaging-type parts conveyance mode.
[FIG. 19-3] FIG. 19-3 depicts a parts conveyance mode using a tray-type parts container.
[FIG. 19-4] FIG. 19-4 depicts a parts conveyance mode using a stick-type parts container.
[FIG. 19-5] FIG. 19-5 depicts a parts conveyance mode using a bag/pack type parts container.

### EXPLANATIONS OF LETTERS OR NUMERALS

- 10: production management system
- 11: initial-data generating unit
- 12: production-BOM master DB
- 20: production management system
- 21: progress updating unit
- 22: production order DB
- 30: warehouse management system
- 31: movement processing unit
- 32: shelf stock DB
- 100: parts management system
- 110: maintenance unit
- 120: supply-box master DB
- 130: registering unit
- 140: supply box DB
- 150: tracking unit
- 160: state reflecting unit
- 170: subtracting unit
- 180: extracting unit
- 185: supply-box-log storage unit
- 190: operation monitoring unit
- 195: editing unit
- 200: computer
- 210: RAM
- 211: parts management program
- 220: CPU
- 230: HDD
- 240: LAN interface
- 250: input/output interface
- 260: DVD drive

### BEST MODE(S) FOR CARRYING OUT THE INVENTION

Exemplary embodiments of a parts management program, a parts management method, and a parts management device according to the present invention will be explained below in detail with reference to the accompanying drawings. In an embodiment of the present invention, a line (production line) includes plural processes, and parts are supplied to each process by plural types of parts supply boxes.

### Embodiments

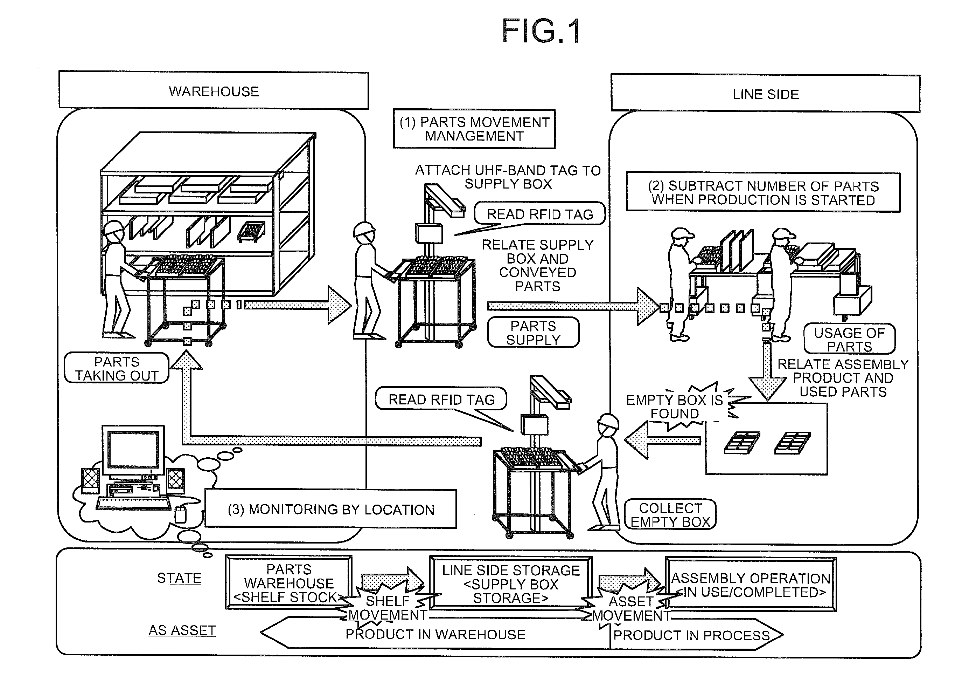

First, an outline of a parts management system according to a first embodiment of the present invention is explained. FIG. 1 is an explanatory diagram of the outline of the parts management system according to the present embodiment. In production of an information processing device and the like, parts necessary to assemble a product are taken to a line by a supply box from a parts warehouse. An operator receiving a parts dispatch instruction from a production management system takes out parts necessary for the line from the parts warehouse, and conveys the parts by the supply box. Each line includes plural processes. The supply box is placed at a position of an address assigned within each process. The address is determined for each part.

As types of supply boxes, there are a supply box to convey only one type of parts, and a supply box to convey plural types of parts necessary to assemble a product. Upon finding an empty supply box in a line, the operator collects the empty box, and carries the box to the parts warehouse.

In the parts management system according to the present embodiment, a UHF-band RFID tag is attached to the supply box. An RFID tag reader is positioned at an exit of the parts warehouse and at an exit of the line, respectively, thereby tracking a movement of the supply box. The parts management system according to the present embodiment stores information of a relationship between the supply box and parts conveyed by the supply box. The parts management system recognizes a movement of parts from the parts warehouse to the line, by tracking a movement of the supply box.

The parts management system according to the present embodiment stores the number of parts accommodated in the supply box taken to the line, and stores information of a relationship between an assembly product, used parts, and the number of the used parts. The number of parts accommodated in the supply box is subtracted corresponding to the number of parts used, by regarding that the parts in the supply box are used when production of the assembly product is started. With this arrangement, the number of off-the-shelf parts in the line is managed at each position.

When the RFID tag reader positioned at the exit of the line reads the RFID tag, the parts management system according to the present embodiment regards that the supply box attached with the read RFID is an empty box. When a number stored as the number of parts accommodated in the supply box is not zero, the parts management system determines that the number of used parts is contradictory, and outputs an alarm. When a time interval from when the number of parts accommodated in the supply box becomes zero until when the supply box is collected as an empty box is longer than a predetermined time, the parts management system determines that the empty box is stagnant in the line, and outputs an alarm.

The parts management system according to the present invention determines whether a time interval of supply boxes is appropriate, based on a time interval of collecting the same type of supply box as an empty box and a time interval from when a supply box is moved to a line until when the number of parts accommodated in this supply box becomes zero. In this case, the same type of supply box means a supply box used to supply the same type of parts (the number of parts types can be singular or plural) to the same process of the same line.

The parts management system according to the present embodiment notifies to a shelf management system that manages shelf information, a state that parts accommodated in the supply box have changed from "off-the-shelf parts" to "product in process" by regarding that the parts in the supply box have been used when production of an assembly product is started. With this arrangement, the parts management system supports asset management by the shelf management system.

As described above, the parts management system according to the present embodiment manages a movement of parts using the UHF-band RFID tag attached to the supply box, and also manages the number of parts for each supply box. As a result, a parts inventory in the line can be accurately managed. When the number of parts in the line is accurately managed, a state of using the parts and a state of supplying the parts can be monitored, and management of shelf information can be supported.

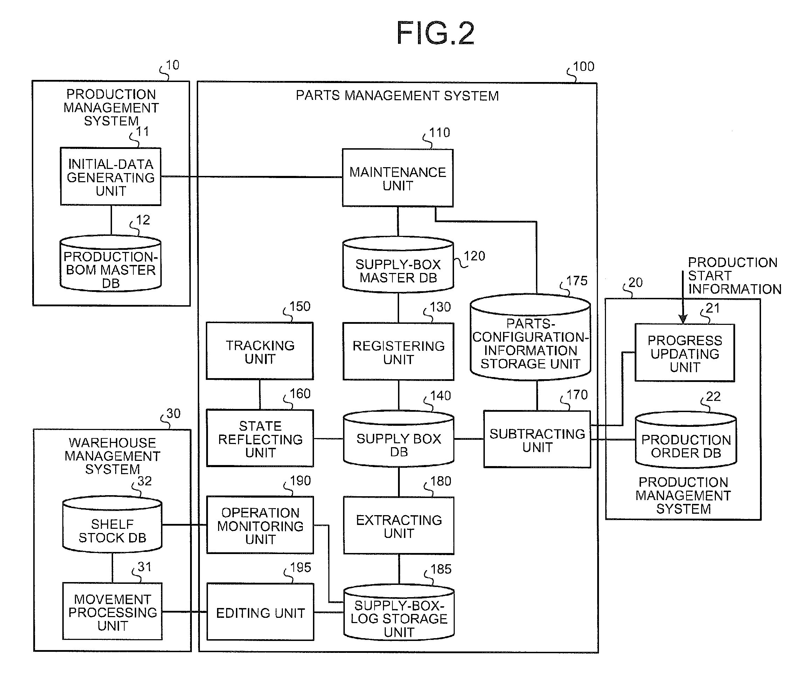

A system configuration of the parts management system according to the present embodiment is explained next. FIG. 2 is a functional block diagram of the system configuration of the parts management system according to the present embodiment. As illustrated in FIG. 2, a parts management system 100 includes a maintenance unit 110, a supply-box master DB 120, a registering unit 130, a supply box DB 140, a tracking unit 150, a state reflecting unit 160, a subtracting unit 170, a parts-configuration-information storage unit 175, an extracting unit 180, a supply-box-log storage unit 185, an operation monitoring unit 190, and an editing unit 195.

The maintenance unit 110 is a processor that performs registration, change, and deletion of supply-box master information stored in the supply-box master DB 120, and parts configuration information stored in the parts-configuration-information storage unit 175. The supply-box master information indicates information managed for each type of supply box. The parts configuration information indicates parts used for an assembly product and the number of these parts. The maintenance unit 110 generates initial information of supply-box master information and parts configuration information, respectively using information generated by an initial-data generating unit 11 from a production-BOM master DB 12 of a production management system 10. The maintenance unit 110 registers generated initial information into the supply-box master DB 120 and the parts-configuration-information storage unit 175.

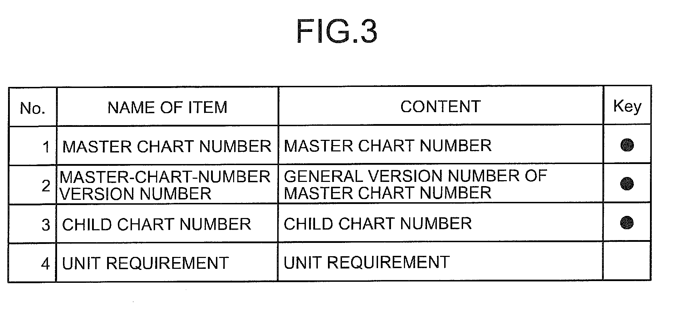

The production-BOM master DB 12 is a database that stores a BOM (bill of material) as parts information for each assembly product. FIG. 3 is one example of a record configuration of a BOM stored in the production-BOM master DB 12. As illustrated in FIG. 3, this record includes "master chart number" representing a chart number of an assembly product, "master-chart-number version number" representing a general version number of the "master chart number", "child chart number" representing a chart number of a part, and "unit requirement" representing a required number of parts.

The maintenance unit 110 writes identification information of a supply box into a UHF-band RFID tag attached to the supply box. The identification information of a supply box includes chart numbers of a line, a process, an address, and a part identifying a type of the supply box, and a serial number of each type of the supply box.

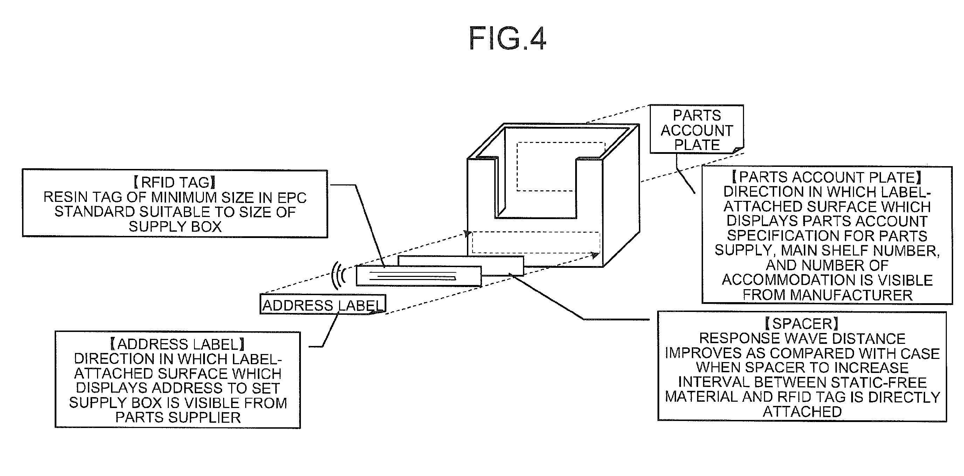

FIG. 4 is an example of attaching an RFID tag to a supply box. As illustrated in FIG. 4, the RFID tag is attached to sandwich a spacer at a front lower part of the supply box having a static-free arrangement. An address label indicating an address of the supply box is attached to the RFID tag. On the other hand, a parts account plate indicating a parts specification, a main shelf number (shelf number of parts warehouse), and the number of accommodation is attached to a back surface of the supply box. The maintenance unit 110 also prints the address label and the parts account plate.

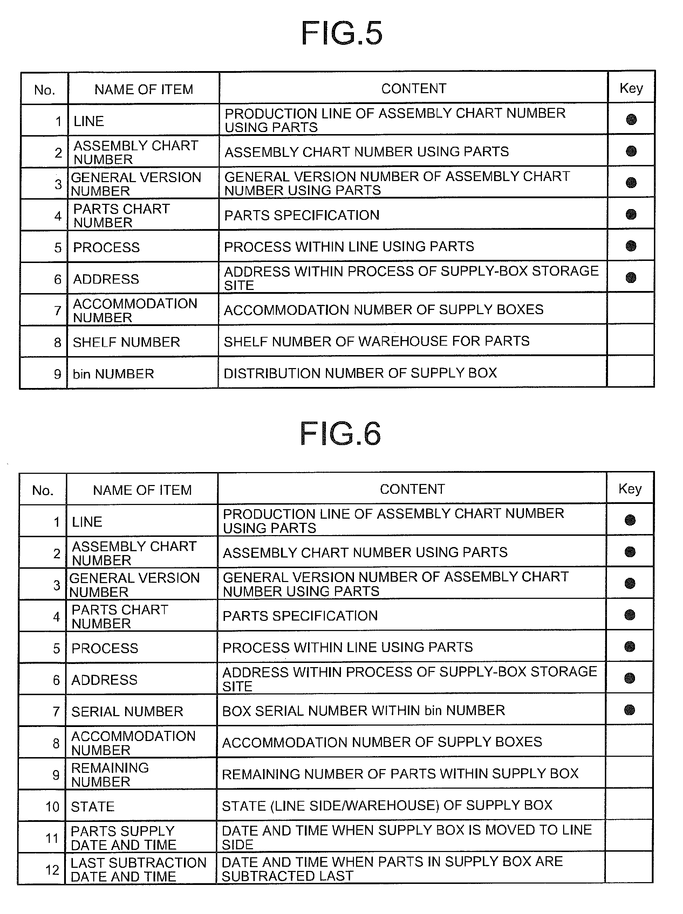

The supply-box master DB 120 is a database that stores supply-box master information. FIG. 5 is one example of a record configuration of the supply-box master information stored in the supply-box master DB 120. As illustrated in FIG. 5, this record includes "line" representing a production line using parts supplied by a supply box, "assembly chart number" representing a chart number of an assembly product using parts supplied by the supply box, "general version number" representing a general version number of an assembly chart number, "parts chart number" representing a chart number of parts supplied by the supply box, "process" representing a process within the production line using parts supplied by the supply box, "address" representing an address within the process of a supply-box storage site, "number of accommodation" representing the number of accommodation of parts in the supply box, "shelf number" representing a shelf number in a parts warehouse of parts supplied by the supply box, and "bin number" representing a distribution number of the supply box.

The registering unit 130 is a processor that generates supply box data to manage each supply box using the supply-box master information stored in the supply-box master DB 120, and registers the generated data into the supply box DB 140.

The supply box DB 140 is a database that stores supply box data. FIG. 6 is one example of a record configuration of supply box data stored in the supply box DB 140. As illustrated in FIG. 6, this record includes "line", "assembly chart number", "general version number", "parts chart number", "process", "address", "serial number" representing a box serial number (serial number) within "bin number", "accommodation number", "remaining number" representing a remaining number of parts within a supply box, "state" representing whether the supply box is at a line side or in a warehouse, "supply date and time" representing date and time when the supply box is moved to the line side, and "last subtraction date and time" representing date and time when parts in the supply box are subtracted last.

The tracking unit 150 is a processor that receives information of RFID tags read by the RFID tag readers positioned at the exit of the warehouse and at the exit of the line, respectively and tracks a movement of a supply box. The tracking unit 150 generates a tracking log of the supply box.

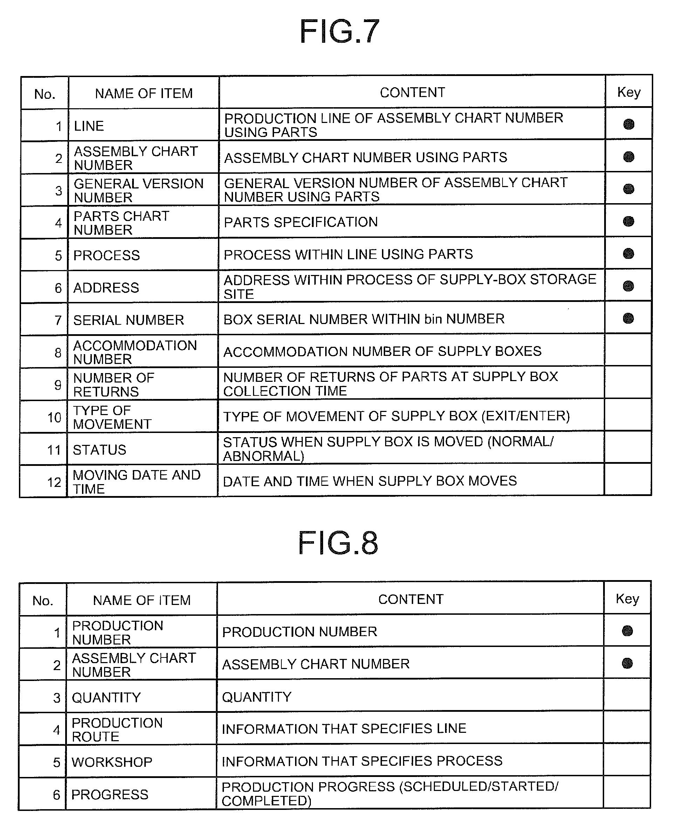

FIG. 7 is one example of a record configuration of a tracking log. As illustrated in FIG. 7, this record includes "line", "assembly chart number", "general version number", "parts chart number", "process", "address", "serial number", "accommodation number", "number of returns" representing the number of returns of parts at a supply box collection time, "type of movement" representing whether the supply box entered to or exited from a line, "statues" representing a status at a supply box moving time, and "moving date and time" representing date and time when the supply box moved.

The state reflecting unit 160 is a processor that reflects a movement of a supply box into the supply box DB 140 using a tracking log generated by the tracking unit 150. Specifically, the state reflecting unit 160 updates the "state" of supply box data and the "supply date and time".

The subtracting unit 170 is a processor that receives a production start notification of an assembly product from a progress updating unit 21 of a production management system 20, reads information concerning an assembly product of which production is started from a production order DB 22 updated by the progress updating unit 21, and subtracts the number of used parts from supply box data of a supply box accommodating parts to be used for the assembly product of which production is started.

FIG. 8 is one example of a record configuration of production order information stored in the production order DB 22. As illustrated in FIG. 8, this record includes "production number" identifying production, "assembly chart number", "quantity" representing the number of products produced, "production route" as information specifying a production line, "workshop" as information specifying a process, and "progress" representing a progress of production.

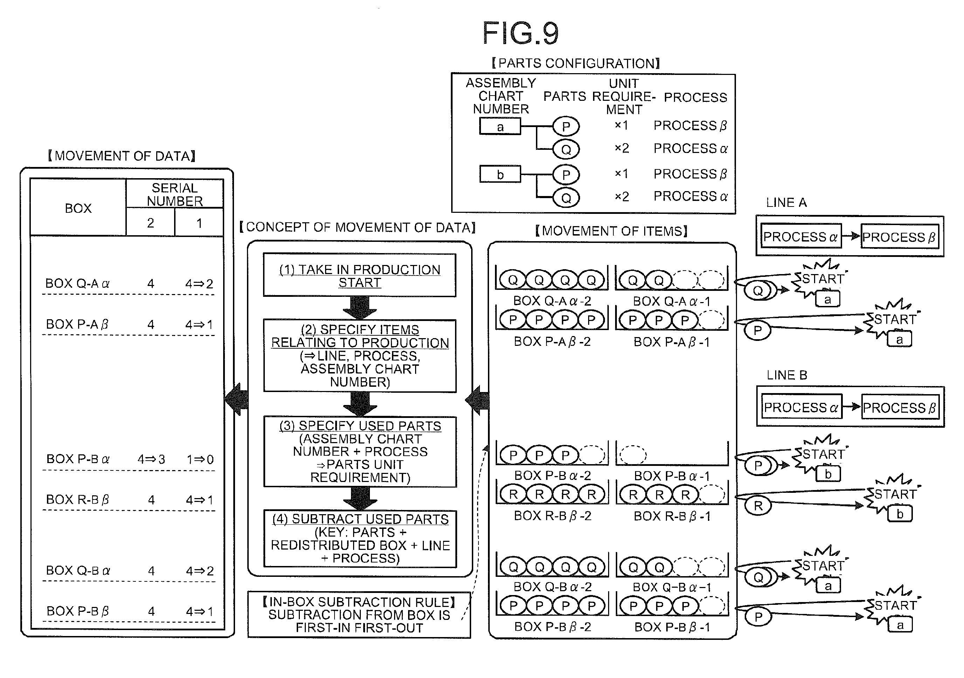

FIG. 9 is an explanatory diagram of a subtraction process performed by the subtracting unit 170. FIG. 9 depicts the following processes. A line A and a line B include a process α and a process β. In the line A, two parts Q are used in the process α, and one part P is used in the process β, by an assembly chart number a. In the line B, two parts P are used in the process α, and one part R is used in the process β, by an assembly chart number b, and two parts Q are used in the process α, and one part P is used in the process β, by the assembly chart number a.

A supply box Q-Aα-1 and a supply box Q-Aα-2 accommodate four parts Q, respectively. A supply box P-Aβ-1 and a supply box P-Aβ-2 accommodate four parts P, respectively. The "Q-Aα-1" and the like are pieces of information used to identify a supply box, and include information of a part, a line, a process, and a serial number. For example, the "Q-Aα-1" indicates that the part Q is an accommodated part, Aα is an arranged line and an arranged process, and the serial number is 1.

Similarly, a supply box P-Bα-1 and a supply box P-Bα-2 accommodate one part P and four parts P, respectively. A supply box R-Bβ-1 and a supply box R-Bβ-2 accommodate four parts R, respectively. A supply box Q-Bα-1 and a supply box Q-Bα-2 accommodate four parts Q, respectively. A supply box P-Bβ-1 and a supply box P-Bβ-2 accommodate four parts P, respectively.

Upon receiving a notification of a start of production in this state, the subtracting unit 170 specifies items that are used to start the production, that is, a line, a process, and an assembly chart number, with reference to the production order DB 22. The subtracting unit 170 specifies used parts and numbers of the used parts, using the parts configuration information stored in the parts-configuration-information storage unit 175 from the assembly chart number and the process that are specified. The subtracting unit 170 reads from the supply box DB 140 the supply box data of a supply box which first entered the line among supply boxes specified by the line, the process, and the part. The subtracting unit 170 subtracts the number of used parts from the "remaining number", and writes an updated number after the subtraction into the supply box DB 140 as updated supply box data.

When production using the assembly chart number a is started in the process α, of the line A, for example, the subtracting unit 170 specifies the line A, the process α, and the assembly chart number a, with reference to the production order DB 22. The subtracting unit 170 specifies the used part Q and a number "2", using the parts configuration information stored in the parts-configuration-information storage unit 175 from the assembly chart number a and the process α. The subtracting unit 170 reads from the supply box DB 140 the supply box data of the supply box Q-Aα,-1 which first entered the line among supply boxes specified by the line A, the process α, and the part Q. The subtracting unit 170 subtracts the number "2" of used parts from the "remaining number", and writes an updated number after the subtraction into the supply box DB 140 as updated supply box data.

In this way, the subtracting unit 170 specifies a line, a process, and an assembly chart number which are used to start production, with reference to the production order DB 22. The subtracting unit 170 specifies used parts and numbers of the used parts, using the parts configuration information stored in the parts-configuration-information storage unit 175 from the assembly chart number and the process that are specified. The subtracting unit 170 updates the "remaining number" of the supply box data of the supply box which first entered the line among supply boxes specified by the line, the process, and the part. Accordingly, a parts inventory in the line can be accurately managed.

The subtracting unit 170 updates the last subtraction date and time of the supply box data, with date and time when the "remaining number" of the supply box data is updated. When the subtracting unit 170 updates the last subtraction date and time of the supply box data, the operation monitoring unit 190 can monitor a stagnation of the supply box in the line as described later.

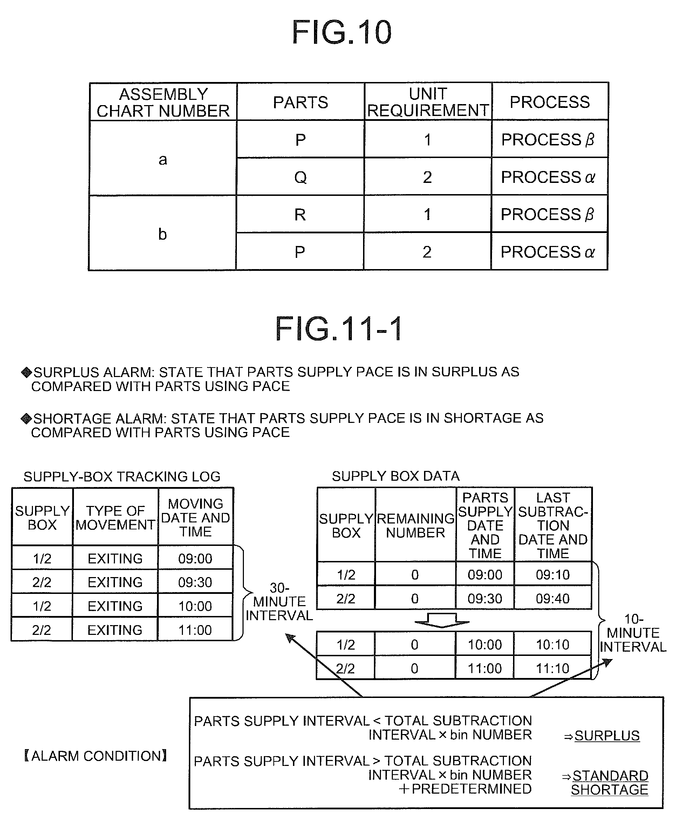

The parts-configuration-information storage unit 175 stores parts configuration information. FIG. 10 is one example of parts configuration information stored in the parts-configuration-information storage unit 175. As illustrated in FIG. 10, the parts-configuration-information storage unit 175 stores parts, the number of the parts, and an assembly, for each assembly chart number by relating them to each other.

The extracting unit 180 is a processor that extracts updated supply box data when the supply box DB 140 is updated, and writes the extracted data as a log into the supply-box-log storage unit 185. That is, when the supply box is moved or when parts in the supply box are used, the extracting unit 180 extracts corresponding supply box data, and writes the data as a log into the supply-box-log storage unit 185.

The supply-box-log storage unit 185 stores a log that the extracting unit 180 extracted from the supply box DB 140, when the supply box DB 140 is updated.

The operation monitoring unit 190 is a processor that monitors a parts supply pace and a state of using parts, by a log written into the supply-box-log storage unit 185, and outputs a parts-supply-pace excessiveness/shortage alarm and an empty-box collection/stagnation/contradiction alarm when necessary.

FIG. 11-1 is an explanatory diagram of a parts-supply-pace excessiveness/shortage alarm output by the operation monitoring unit 190. As illustrated in FIG. 11-1, the operation monitoring unit 190 measures as a parts interval an average value of time intervals that the same type supply boxes exit (leave) from the line, and measures as a total-number subtraction interval an average value of time from when a supply box enters the line (date and time of a parts supply) until when the number of parts (the remaining number) becomes zero.

Thereafter, the operation monitoring unit 190 compares a parts supply interval with "total-number subtraction interval × bin number". When it is "parts supply interval < total-number subtraction interval × bin number", the operation monitoring unit 190 determines that a parts supply pace is in excess as compared with a parts using pace, and outputs an excessiveness alarm. When it is "parts supply interval > total-number subtraction interval × bin number + predetermined standard", the operation monitoring unit 190 determines that a part supply pace is in shortage as compared with a parts using pace, and outputs a shortage alarm.

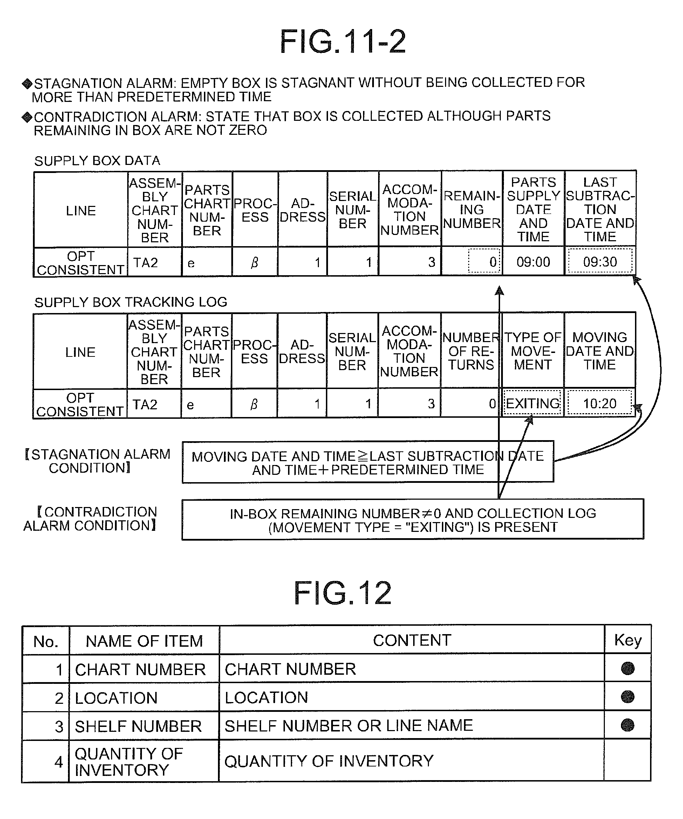

FIG. 11-2 is an explanatory diagram of an empty-box collection/stagnation/contradiction alarm output by the operation monitoring unit 190. As illustrated in FIG. 11-2, the operation monitoring unit 190 compares a moving date and time with a last subtraction date and time when an empty box is collected (exited). When it is "moving date and time ≥ last subtraction date and time + predetermined time", the operation monitoring unit 190 determines that an uncollected state continues by or more than a predetermined time from a time when the supply box becomes empty, and outputs a stagnation alarm.

The operation monitoring unit 190 checks whether a remaining number of the supply box data is zero, when an empty box is collected (exited). When the remaining number is not zero, the operation monitoring unit 190 determines that the empty box is collected although unused parts are remaining in the box, and outputs a contradiction alarm.

When a remaining number of the supply box data is zero and also when a type of movement of tracking log is "entering", the operation monitoring unit 190 monitors a lapse time from a last subtraction date and time until the current time. When a predetermined time or more has passed, the operation monitoring unit 190 determines that an empty box is not collected although all parts have been used, and outputs a stagnation alarm.

As described above, the operation monitoring unit 190 monitors a parts supply pace and a state of using parts, by a log written into the supply-box-log storage unit 185. The operation monitoring unit 190 outputs a parts-supply-pace excessiveness/shortage alarm and an empty-box collection/stagnation/contradiction alarm when necessary. With this arrangement, a line manager can properly recognize a line state.

The operation monitoring unit 190 monitors a parts inventory for each line, each process, and each supply box using a shelf stock DB 32 managed by a log written in the supply-box-log storage unit 185 and a warehouse management system 30.

The warehouse management system 30 manages a parts inventory in the warehouse and the line. The shelf stock DB 32 is a database that stores information of a parts inventory in the warehouse and the line. FIG. 12 is one example of a record configuration of shelf stock information stored in the shelf stock DB 32. As illustrated in FIG. 12, this record includes "chart number" representing a chart number of parts, "location" representing whether parts are present in the warehouse or in a line, "shelf number" representing a line name when the parts are in a line, and "quantity of inventory" representing a quantity of inventory.

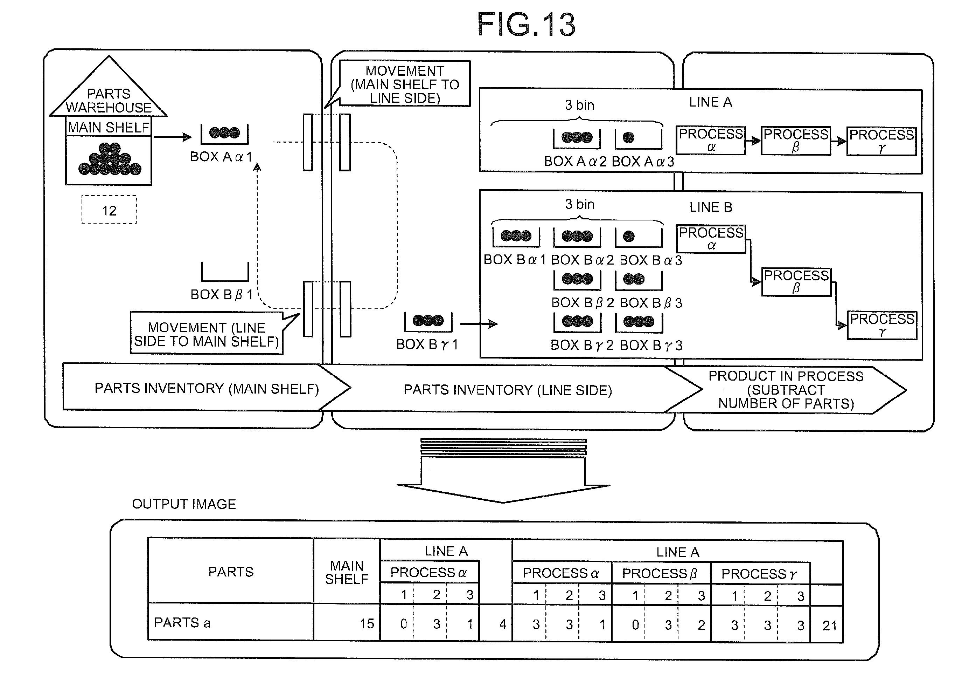

FIG. 13 is an explanatory diagram of monitoring of a parts inventory for each line, each process, and each supply box performed by the operation monitoring unit 190. As illustrated in FIG. 13, the operation monitoring unit 190 monitors a quantity of inventory of parts in each of a parts warehouse, a line, a process, and a supply box, and outputs a monitored result.

The editing unit 195 edits a log written in the supply-box-log storage unit 185, generates information concerning a movement of parts, and outputs the information to the warehouse management system 30. That is, when a supply box enters a line, the editing unit 195 notifies the warehouse management system 30 that parts accommodated in the supply box are taken from the warehouse and put to the line. When a subtraction of parts is performed, the editing unit 195 notifies the warehouse management system 30 a state that the parts as off-the-shelf parts have changed to a product in process. When the warehouse management system 30 receives the notification concerning the movement of the parts, a movement processing unit 31 reflects the movement to the shelf stock DB 32.

As explained above, the editing unit 195 generates information concerning a movement of parts, and notifies the information to the warehouse management system 30. Accordingly, the warehouse management system 30 can accurately manage a parts inventory including a parts inventory in the line.

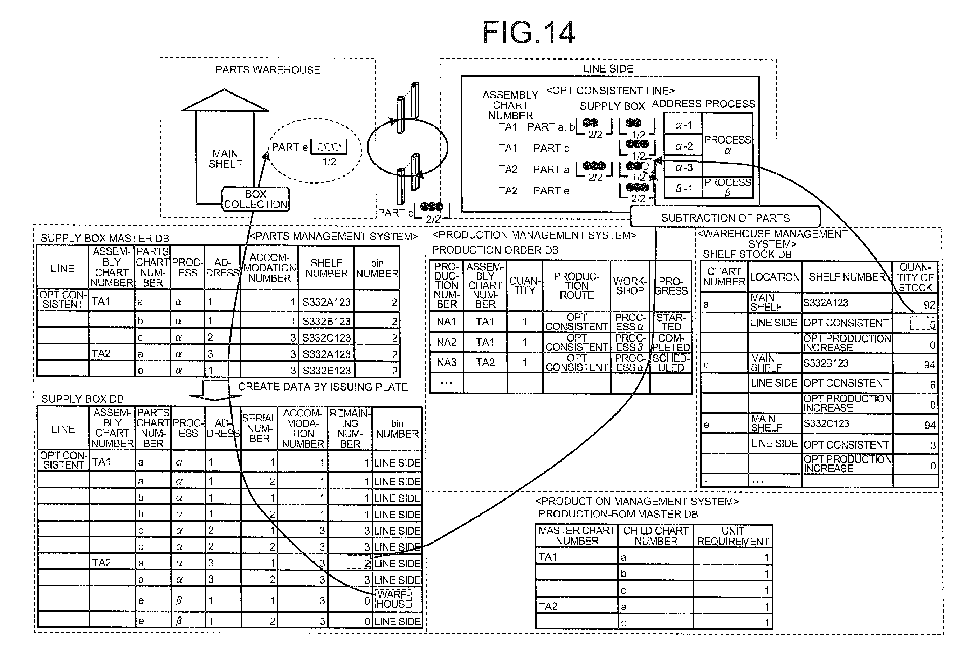

FIG. 14 depicts a relationship of data between systems according to the present embodiment. As illustrated in FIG. 14, when production is started by the process α of an OPT consistent line, for example, a part "a" of a serial number "1" at address "3" of the process α is used. Therefore, a remaining number of supply box data corresponding to the supply box DB 140 of the parts management system 100 changes from three to two, and a quantity of inventory of the OPT consistent line of the shelf stock DB 32 of the warehouse management system 30 changes from six to five.

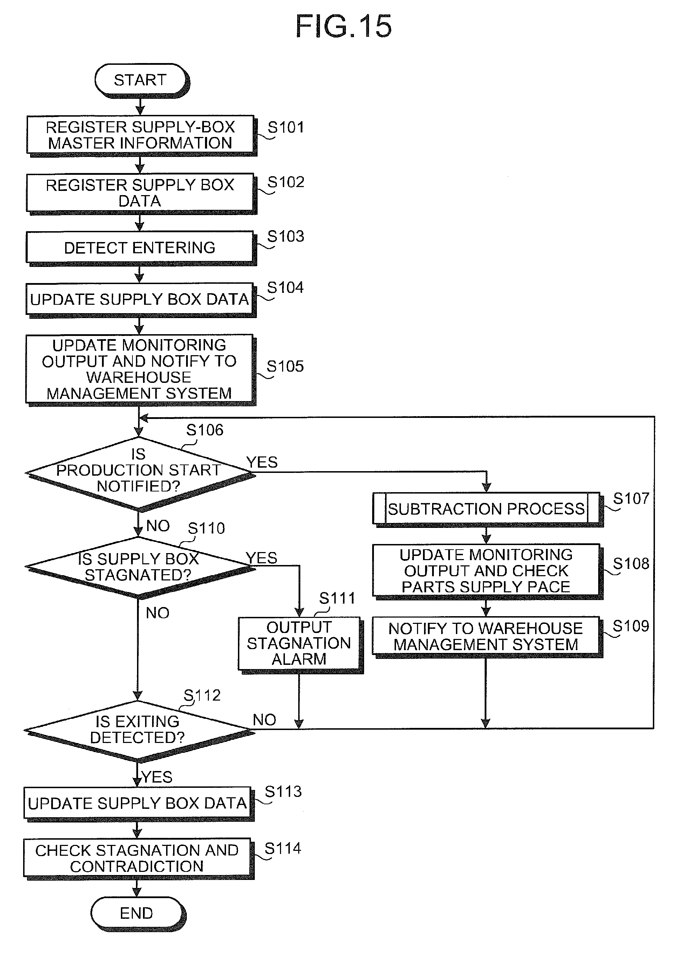

A process procedure performed by the parts management system 100 according to the present embodiment is explained next. FIG. 15 is a flowchart of the process procedure performed by the parts management system 100 according to the present embodiment. As an example, a process performed by the parts management system 100 from when supply box data of one supply box is registered into the supply box DB 140 based on supply-box master information until when the supply box is collected by carrying parts to the line is explained below.

As illustrated in FIG. 15, in the parts management system 100, the maintenance unit 110 registers into the supply-box master DB 120 the supply-box master information determined based on parts accommodated by the supply box, and the line and the process used for the parts (Step S101). When a use of the supply box is started, the registering unit 130 generates supply box data from the information of the supply-box master DB 120, and registers the data into the supply box DB 140 (Step S102).

The tracking unit 150 detects entering of the supply box to the line, based on the information that the RFID tag reader positioned at the exit of the warehouse reads from the RFID tag (Step S103). The tracking unit 150 generates a tracking log, and the state reflecting unit 160 updates the supply box DB 140 based on the tracking log (Step S104).

The extracting unit 180 generates an update log of the supply box DB 140, and writes the update log into the supply-box-log storage unit 185. The operation monitoring unit 190 updates a monitoring output based on the update log. The editing unit 195 notifies a movement of the parts to the warehouse management system 30 (Step S105).

Thereafter, when the operation monitoring unit 190 receives a notification of the start of production from the production management system 20 (YES at Step S106), the subtracting unit 170 subtracts the number of parts used for the production and updates the supply box DB 140 (Step S107) , and the extracting unit 180 generates an update log of the supply box DB 140 and writes the updated log into the supply-box-log storage unit 185.

The operation monitoring unit 190 updates a monitoring output by the update log, and determines whether the number of parts in the supply box becomes zero. When the number of parts becomes zero, the operation monitoring unit 190 calculates an average value of total-number subtraction intervals, and checks a parts supply pace (Step S108). The editing unit 195 notifies the warehouse management system 30 that the parts are not in the state of off-the-shelf parts (Step S109).

The operation monitoring unit 190 determines whether a supply box is stagnant, based on whether the supply box having no parts is in the state of being in the line during a predetermined time or more. When it is determined that the supply box is stagnant (YES at Step S110), the operation monitoring unit 190 outputs a stagnation alarm (Step S111).

When the tracking unit 150 detects exit of the supply box from the line based on information that the RFID tag reader positioned at the exit of the line read from the RFID tag (Step S112), the tracking unit 150 generates a tracking log. The state reflecting unit 160 updates the supply box DB 140 based on the tracking log (Step S113).

The extracting unit 180 generates an update log of the supply box DB 140, and writes the updated log into the supply-box-log storage unit 185. The operation monitoring unit 190 checks a stagnation of the supply box, and checks a contradiction of the number of parts (Step S114).

As described above, when a movement of the supply box is tracked using an RFID tag and also when the number of parts in the supply box is managed based on a production start notification, a state of using parts in the line can be accurately managed.

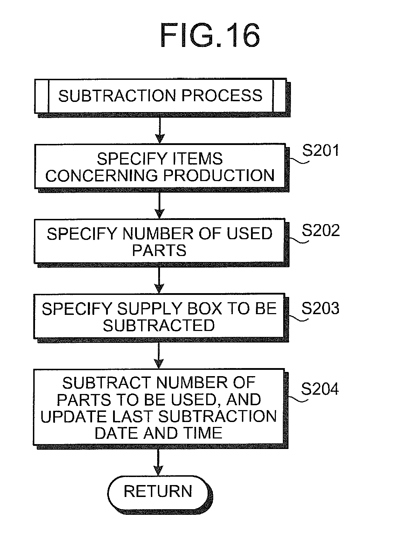

A process procedure of the subtraction process depicted in FIG. 15 is explained next. FIG. 16 is a flowchart of the process procedure of the subtraction process depicted in FIG. 15. As illustrated in FIG. 16, in the subtraction process, the subtracting unit 170 specifies a line, a process, and an assembly chart number from a production order of a started production (Step S201), and specifies parts to be used and the number of the parts from the process and the assembly chart number using parts configuration information (Step S202).

The subtracting unit specifies a supply box from which the number of parts to be used is subtracted, based on the line, the process, and the parts (Step S203), subtracts the number of parts to be used from the supply box data corresponding to the supply box DB 140, and updates the supply box DB 140 by the current date and time as a last subtraction date and time (Step S204).

As described above, the subtracting unit 170 specifies a supply box from which the number of parts to be used is subtracted based on the production order and the parts configuration information, and updates the corresponding supply box data. With this arrangement, off-the-shelf parts can be accurately managed for each supply box.

As described above, in the present embodiment, the subtracting unit 170 specifies parts used for an assembly product of which production is started, the number of used parts, and a supply box, based on the parts configuration information of the parts-configuration-information storage unit 175 and the production order in the production order DB 22. The subtracting unit 170 subtracts the number of used parts from the number of parts in the supply box data, and updates the supply box DB 140. Therefore, a parts inventory can be accurately managed by the supply box DB 140.

In the present embodiment, the tracking unit 150 detects a supply box entering or exiting the line based on the information of the UHF-band RFID tag. The state reflecting unit 160 reflects a movement of the supply box to the supply box DB 140. Therefore, the tracking unit 150 can accurately manage whether the parts are in the parts warehouse or in the line, by the supply box DB 140.

In the present embodiment, the extracting unit 180 writes the update log of the supply box DB 140 into the supply-box-log storage unit 185. The operation monitoring unit 190 performs monitoring of excessiveness and shortage of the parts supply pace, a stagnation of the supply box in the line, and the number of parts, based on the update log of the supply-box-log storage unit 185. Therefore, the operation monitoring unit 190 can accurately manage the state of using parts in the line.

In the present embodiment, when the parts change from warehouse inventory to a line inventory, and also when the line inventory changes to a product in process, the editing unit 195 notifies the change to the warehouse management system 30 based on the update log of the supply-box-log storage unit 185. Therefore, the warehouse management system 30 can accurately manage the parts inventory including parts inventory in the line.

In the present embodiment, it is explained that the parts management system 100, the production management system 10, the production management system 20, and the warehouse management system 30 are configured as separate systems. However, the present invention is not limited thereto, and can be similarly applied to a case that all or parts of these systems are configured as one system.

In the present embodiment, while the parts management system has been explained, a parts management program having a similar function can be obtained by achieving the configuration held by the parts management system by software. A computer that executes the parts management program is explained below.

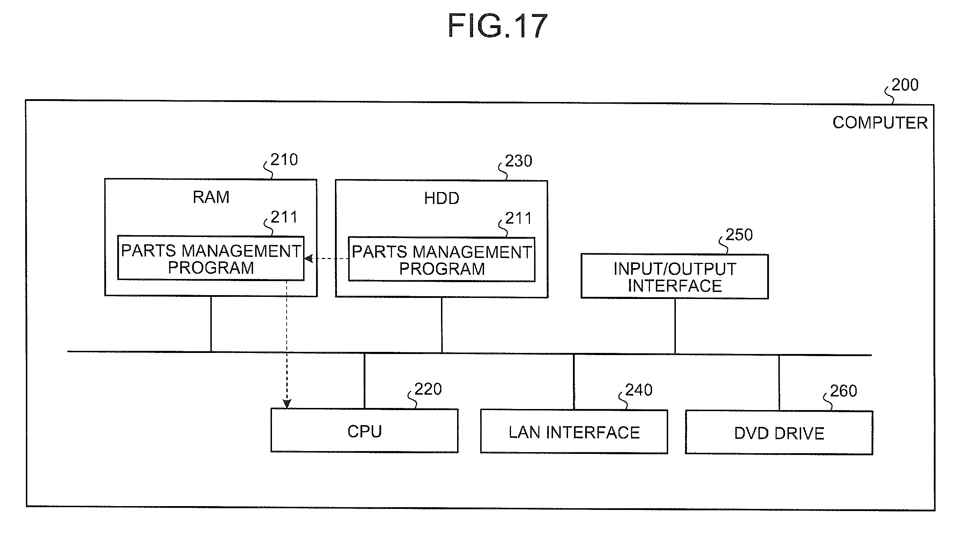

FIG. 17 is a functional block diagram of a configuration of a computer that executes a parts management program according to the present embodiment. As depicted in FIG. 17, a computer 200 includes a RAM 210, a CPU 220, an HDD 230, a LAN interface 240, an input/output interface 250, and a DVD drive 260.

The RAM 210 is a memory that stores a program and an intermediate result of execution of the program. The CPU 220 reads a program from the RAM 210 and executes the program. The HDD 230 is a disk device that stores a program and data. The LAN interface 240 connects the computer 200 to other computer via a LAN. The input/output interface 250 connects an input device such as a mouse and a keyboard and a display device. The DVD drive 260 reads and writes a DVD.

A parts management program 211 executed by the computer 200 is stored into the DVD. The DVD drive 260 reads the program from the DVD, and installs the program into the computer 200. Alternatively, the parts management program 211 is stored into a databases of other computer connected via the LAN interface 240, and the program is read from these databases and is installed into the computer 200. The installed parts management program 211 is stored into the HDD 230, and is read by the RAM 210. The CPU 220 executes the read program.

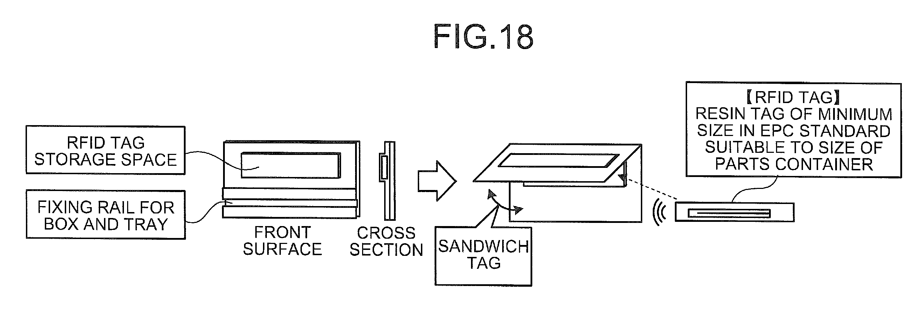

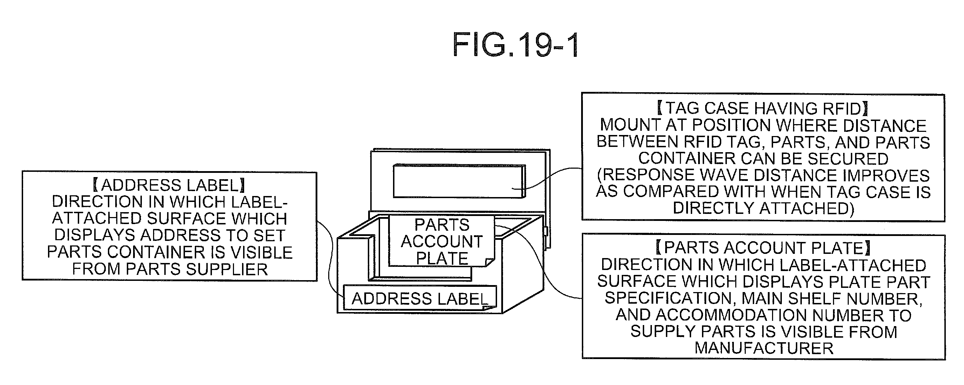

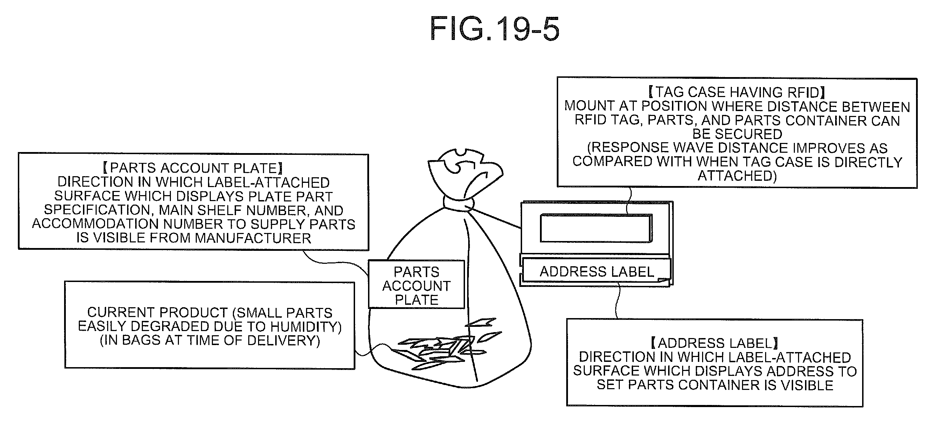

In the above embodiment, it is explained that a supply box is used to convey parts. However, parts can be conveyed in various modes other than using the supply box depicted in FIG. 4. A parts conveyance mode other than using the supply box depicted in FIG. 4 is explained below with reference to FIG. 18 and FIGS. 19-1 to 19-5.

FIG. 18 is one example of a tag case commonly used to convey parts in various modes. FIGS. 19-1 to 19-5 depict parts conveyance modes other than using the supply box depicted in FIG. 4. The tag case depicted in FIG. 18 is attached with an RFID tag, and includes an RFID-tag storage space that stores the RFID tag, and a box/tray fixing rail to fix a box as a parts container and a rail. The RFID tag is stored in a mode of being sandwiched by the RFID-tag storage space. When the tag case is used to store the RFID tag and also when the tag case is mounted at a position capable of securing a distance between the RFID tag, the parts, and the parts container, a response wave distance can be improved as compared with a case when the RFID tag is directly attached.

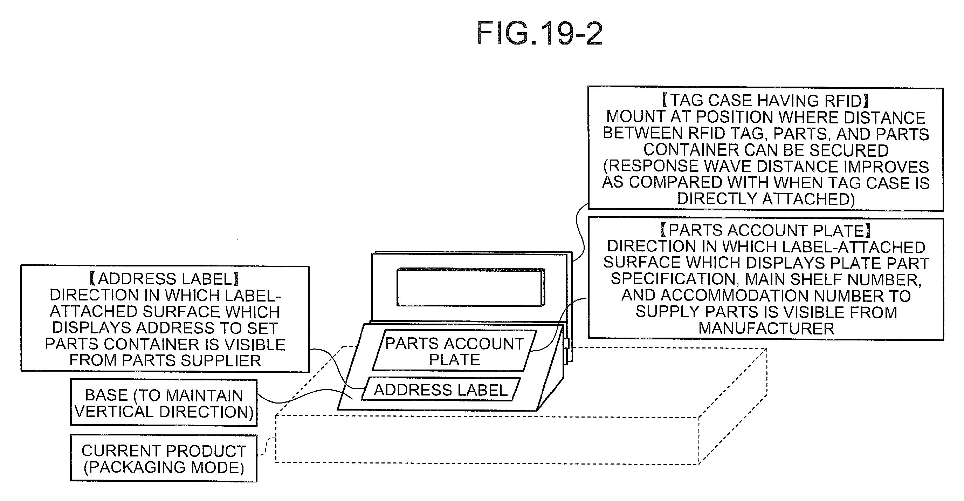

FIG. 19-1 depicts a parts conveyance mode using a box-type parts container. This box-type parts container is different from the supply box depicted in FIG. 4 in that the RFID tag is attached by a tag case. FIG. 19-2 depicts a packaging-type parts conveyance mode, in which parts in a packaging mode is directly positioned at a parts storage site. A base attached with a parts account plate, an address label, and a tag case is positioned on parts in the packaging mode. The base is used to direct the address label and the parts account plate face vertically.

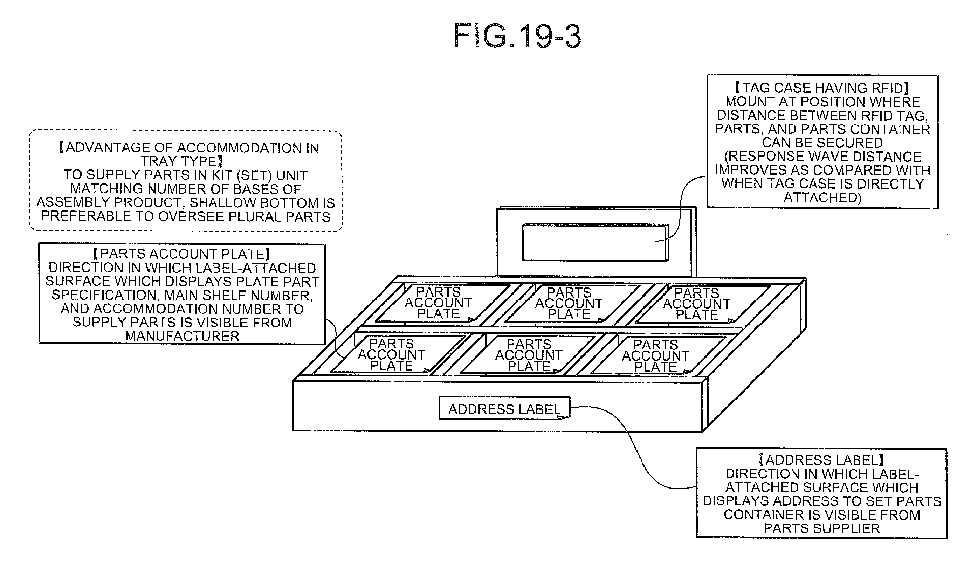

FIG. 19-3 depicts a parts conveyance mode using a tray-type parts container, and this mode is used to supply parts in a kit unit. The tray-type parts container uses a shallow bottom to facilitate the operator to oversee plural parts.

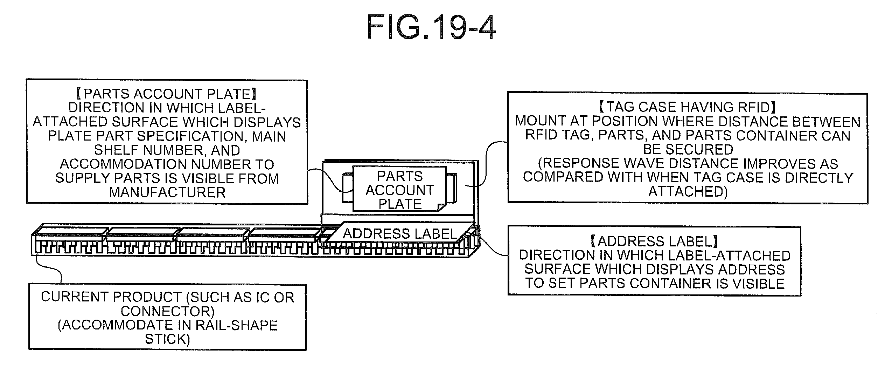

FIG. 19-4 depicts a parts conveyance mode using a stick-type parts container, and this mode is used to supply an integrated circuit (IC) and a connector. FIG. 19-5 depicts a parts conveyance mode using a bag/pack type parts container, and this mode is used to supply small parts, which tends to be degraded due to humidity, in bags at the time of delivery.

### INDUSTRIAL APPLICABILITY

As described above, the parts management program, the parts management method, and the parts management device according to the present invention are useful for inventory management of parts, and are particularly suitable when accurate management of a parts inventory in a production line is required.

## Claims

1. A parts management program for managing parts used to produce an assembly product, the parts management program causing a computer to execute:
a used-parts-information reading step of reading parts identification information and number of parts corresponding to an assembly product of which production is started as used-parts identification information and a used number from a storage device that stores parts constitution information that includes assembly-product identification information identifying an assembly product, parts identification information identifying parts used to produce the assembly product, and number of the parts, by relating these pieces of information to each other; and
a number-of-parts updating step of reading parts container information of a parts container that accommodates parts used for an assembly product of which production is started from a storage device that stores parts container information, for each parts container, including parts identification information of parts accommodated in each parts container and number of the parts by relating these pieces of information to parts-container identification information identifying a parts container, and writing into a storage device, parts container information that includes an updated number of parts obtained by subtracting the number of used parts from number of parts identified by the used-parts identification information read by the used-parts-information reading step.

2. The parts management program according to claim 1, wherein the program further causes a computer to execute:
an exit-side-parts-container-identification-information reading step of reading parts-container identification information from an RFID tag attached to the parts container when the parts container is collected from a production line;
a remaining-number-of-parts determining step of determining whether number of parts is zero in the parts container information identified by parts-container identification information read by the exit-side-parts-container-identification-information reading step; and
a box-collection-time-alarm output step of outputting an alarm when it is determined by the remaining-number-of-parts determining step that number of parts is not zero.

3. The parts management program according to claim 2, wherein
the parts container information includes a last subtraction time indicating a time when the used number is subtracted last, and
the number-of-parts updating step writes into a storage device, parts container information updated by using a value obtained by subtracting the used number as a new number of parts and using a current time as a new last subtraction time, and wherein
the program further causes a computer to execute an exiting-time-container-stagnation-alarm output step of comparing the current time with a stagnation limit time that is obtained by adding a predetermined stagnation limit time to a last subtraction time of parts container information identified by parts-container identification information read by the exit-side-parts-container-identification-information reading step, and outputting an alarm when the current time has passed the stagnation limit time.

4. The parts management program according to claims 1, 2 or 3, wherein the program further causes a computer to execute:
a stagnation-time-measurement starting step of determining whether number of parts updated by the number-of-parts updating step is zero, and starting a time measurement when the number of pars is zero; and
an in-site-container-stagnation-alarm output step of determining whether a time of which measurement is started by the stagnation-time-measurement starting step has passed a predetermined time, and outputting an alarm when the started measurement time has passed the predetermined time.

5. The parts management program according to claim 2 or 3, wherein the program further causes a computer to execute:
an entering-side-parts-container-identification-information reading step of reading parts-container identification information from an RFID tag attached to the parts container when the parts container is taken to a production line by accommodating parts into the parts container by number of a dispatch instruction;
a total-number-subtraction-interval measuring step of measuring as a total-number subtraction interval, a time interval from when parts-container identification information is read by the entering-side-parts-container-identification-information reading step until when number of parts updated by the number-of-parts updating step becomes zero;
a parts-supply-interval measuring step of measuring as a parts-supply time interval, a time interval of parts-container identification information read by the exit-side-parts-container-identification-information reading step for a same type of parts container;
a parts-supply-interval-properness determining step of determining whether a parts supply interval is appropriate based on a total-number subtraction interval measured by the total-number-subtraction-interval measuring step and a parts-supply time interval measured by the parts-supply-interval measuring step; and
a parts-supply-interval-alarm output step of outputting an alarm when a parts supply interval is determined as not appropriate by the parts-supply-interval-properness determining step.

6. The parts management program according to any one of claims 1 to 3, wherein the program further causes a computer to execute a line-inventory-information output step of outputting parts inventory information in a production line based on parts container information of which number of parts is updated by the number-of-parts updating step.

7. The parts management program according to claim 5, wherein the program further causes a computer to execute a dispatch-parts-information notifying step of notifying parts identification information and number of parts accommodated in a parts container from which parts-container identification information is read by the entering-side-parts-container-identification-information reading step, as dispatch information, to a warehouse management system that manages information of a warehouse that stores parts.

8. The parts management program according to any one of claims 1 to 3, wherein the program further causes a computer to execute a product-in-process-information notifying step of notifying number of parts updated by the number-of-parts updating step and parts identification information, as product-in-process information, to a warehouse management system that manages information of a warehouse that stores the parts.

9. The parts management program according to any one of claims 1 to 3, wherein the parts container is a parts supply box.

10. A parts management method performed by a parts management device for managing parts used to produce an assembly product, the method comprising:
a used-parts-information reading step of reading parts identification information and number of parts corresponding to an assembly product of which production is started as used-parts identification information and a used number from a storage device that stores parts constitution information that includes assembly-product identification information identifying an assembly product, parts identification information identifying parts used to produce the assembly product, and number of the parts, by relating these pieces of information to each other; and
a number-of-parts updating step of reading parts container information of a parts container that accommodates parts used for an assembly product of which production is started from a storage device that stores parts container information, for each parts container, including parts identification information of parts accommodated in each parts container and number of the parts by relating these pieces of information to parts-container identification information identifying a parts container, and writing into a storage device, parts container information that includes an updated number of parts obtained by subtracting the number of used parts from number of parts identified by the used-parts identification information read by the used-parts-information reading step.

11. A parts management device that manages parts used to produce an assembly product, the device comprising:
a parts-configuration-information storage unit that stores assembly-product identification information identifying an assembly product, parts identification information identifying parts used to produce the assembly product, and number of the parts, by relating these pieces of information to each other, as parts constitution information;
a parts-container-information storage unit that stores parts identification information of parts accommodated in a parts container and number of the parts, by relating these pieces information to parts-container identification information identifying a parts container, as parts container information, for each parts container;
a used-parts-information reading unit that reads parts identification information and number of parts corresponding to an assembly product of which production is started, as used-parts identification information and a used number, from the parts-configuration-information storage unit; and
a number-of-parts updating unit that reads parts container information of a parts container accommodating parts used for an assembly product of which production is started, from the parts-container-information storage unit, and writes into the parts-container-information storage unit, parts container information updated by using a new number of parts obtained by subtracting the number of used parts from number of parts identified by used-parts identification information read by the used-parts-information reading unit.
